# EUROPÄISCHE PATENTSCHRIFT

(11) **EP 2 421 135 B1**
(45) Veröffentlichungstag und Bekanntmachung des Hinweises auf die Patenterteilung: **02.10.2019**
(21) Anmeldenummer: 11006639.6
(22) Anmeldetag: 12.08.2011
(51) Int. Cl.: H02M 3/155, H02M 7/5387, H02M 3/158, H02M 1/00

(54) **TRANSFORMATORLOSE WECHSELRICHTER-SCHALTUNGSANORDNUNG MIT TIEFSETZSTELLERSCHALTUNG**
TRANSFORMERLESS INVERTER WITH STEP-DOWN-CONVERTER
ONDULEUR SANS TRANSFORMATEUR AVEC CONVERTISSEUR ABAISSEUR

(30) Priorität: 20.08.2010 DE 102010035020
(43) Veröffentlichungstag der Anmeldung: 22.02.2012
(73) Patentinhaber: Steca Elektronik GmbH, 87700 Memmingen (DE)
(72) Erfinder: Weissenhorn, Thomas, 87730 Bad Grönenbach (DE); Kloos, Dieter, 74579 Fichtenau (DE); Winter, Andreas, 87743 Egg a. d. Günz (DE); Schekulin, Dirk, 9405 Wienacht-Tobel (CH)
(74) Vertreter: Olbricht Patentanwälte

(56) Entgegenhaltungen:
- EP-A2- 0 852 422
- EP-A2- 1 571 752
- DE-A1- 10 360 549
- DE-A1-102005 047 373
- DE-A1-102009 044 197
- US-A- 5 932 995
- TING QIAN ET AL: "Self-Balanced Input-Series Two-Stage DC-DC Converter and Ripple Match Design", APPLIED POWER ELECTRONICS CONFERENCE, APEC 2007 - TWENTY SECOND ANNUAL IEEE, IEEE, PI, 1. Februar 2007 (2007-02-01), Seiten 1017-1022, XP031085335, ISBN: 978-1-4244-0713-2

## Beschreibung

Die Erfindung bezieht sich auf eine transformatorlose Wechselrichter-Schaltungsanordnung aufweisend eine Tiefsetzstellerschaltung mit zwei parallelen Hauptzweigen zwischen einer Eingangs- und einer Ausgangsseite, einer eingangsseitigen Kondensatorreihenschaltung zwischen den Hauptzweigen, einer Diodenreihenschaltung zwischen den Hauptzweigen, einem Mittelzweig, der einen Zwischenknoten der eingangsseitigen Kondensatorreihenschaltung mit einem Zwischenknoten der Diodenreihenschaltung verbindet, je einer Speicherdrossel in den beiden Hauptzweigen zwischen der Diodenreihenschaltung und der Ausgangsseite, je einem getaktet ansteuerbaren Schalter in den beiden Hauptzweigen zwischen der eingangsseitigen Kondensatorreihenschaltung und der Diodenreihenschaltung sowie einer Steuereinheit zur Ansteuerung der Schalter in einem Schalteransteuerungsmodus, bei dem sie die beiden Schalter zu unterschiedlichen Zeitpunkten und/oder in unterschiedliche Schaltstellungen schaltet, und auf eine damit ausgerüstete transformatorlose Wechselrichter-Schaltungsanordnung, wie sie beispielsweise zur Netzankopplung von Photovoltaikanlagen, kleinen Windgeneratoren und allgemeinen Gleichstromquellen verwendet wird, sowie auf zugehörige Betriebsverfahren.

Eine Tiefsetzstellerschaltung und eine Wechselrichter-Schaltungsanordnung dieser Art sind in der Offenlegungsschrift DE 10 2005 047 373 A1 offenbart. Gegenüber dort genannten anderen herkömmlichen Schaltungen dieser Art lassen sich die dort offenbarten Schaltungen mit vergleichsweise geringem Aufwand und Bauvolumen und geringen EMV-Problemen realisieren und erlauben einen Betrieb mit vergleichsweise hohem Wirkungsgrad. Die Offenlegungsschrift DE 10 2005 047 373 A1 offenbart speziell eine transformatorlose Wechselrichter-Schaltungsanordnung, aufweisend eine Tiefsetzstellerschaltung mit
- einer Eingangsseite mit zwei Eingangsanschlüssen, einer Ausgangsseite mit zwei Ausgangsanschlüssen und je einem Hauptzweig zwischen einem der Eingangsanschlüsse und einem der Ausgangsanschlüsse,
- einer eingangsseitigen Kondensatorreihenschaltung mit wenigstens zwei seriell geschalteten Kondensatoren zwischen den beiden Hauptzweigen,
- einer zwischen der eingangsseitigen und der ausgangsseitigen Kondensatorreihenschaltung angeordneten Diodenreihenschaltung mit wenigstens zwei seriell geschalteten Dioden zwischen den beiden Hauptzweigen,
- je einer Speicherdrossel in den beiden Hauptzweigen,
- je einem getaktet ansteuerbaren Schalter in den beiden Hauptzweigen zwischen der eingangsseitigen Kondensatorreihenschaltung und der Diodenreihenschaltung und
- einer Steuereinheit zur Ansteuerung der Schalter in einem Schalteransteuerungsmodus, bei dem sie die beiden Schalter zu unterschiedlichen Zeitpunkten und/oder in unterschiedliche Schaltstellungen schaltet;
wobei die transformatorlose Wechselrichter-Schaltungsanordnung ferner eine Polwender-/Wechselrichterbrückenschaltung aufweist, die an die Ausgangsanschlüsse der Tiefsetzstellerschaltung angekoppelt ist.

Der Erfindung liegt als technisches Problem die Bereitstellung einer transformatorlosen Wechselrichter-Schaltungsanordnung aufweisend eine Tiefsetzstellerschaltung der eingangs genannten Art sowie eines zugehörigen Betriebsverfahrens zugrunde, die sich mit vergleichsweise geringem Aufwand und Bauvolumen und geringen EMV-Problemen realisieren lassen, einen hohen Wirkungsgrad und eine spezifische Funktionalität aufweisen, wie sie insbesondere zur Netzankopplung von Gleichspannungsquellen, wie Photovoltaikanlagen und Brennstoffzellensystemen, vorteilhaft ist.

Die Erfindung löst dieses Problem durch die Bereitstellung einer transformatorlosen Wechselrichter-Schaltungsanordnung mit den Merkmalen des Anspruchs 1 und eines hierzu korrespondierenden Verfahrens zum Betrieb einer transformatorlosen Wechselrichter-Schaltungsanordnung mit den Merkmalen des Anspruchs 13. Vorteilhafte Ausführungsformen sind in den abhängigen Ansprüchen definiert.

Die erfindungsgemäße transformatorlose Wechselrichter-Schaltungsanordnung baut auf der Tiefsetzstellerschaltung der DE 10 2005 047 373 A1 auf und weist insoweit deren dort beschriebene Vorteile gegenüber anderen herkömmlichen Tiefsetzstellerschaltungen auf, insbesondere bei Verwendung in einer transformatorlosen Wechselrichter-Schaltungsanordnung. Zusätzlich weist die erfindungsgemäße Tiefsetzstellerschaltung eine ausgangsseitige Kondensatorreihenschaltung zwischen den beiden Hauptzweigen auf und der Mittelzweig ist bis zu einem Zwischenknoten dieser ausgangsseitigen Kondensatorreihenschaltung weitergeführt. Dieser Schaltungsaufbau ermöglicht eine sehr vorteilhafte Betriebsweise der Tiefsetzstellerschaltung mit weiter verbessertem Wirkungsgrad.

Die Anordnung wenigstens einer Diode, die je einem der Kondensatoren der ausgangsseitigen Kondensatorreihenschaltung parallelgeschaltet ist, ist von Vorteil. Diese verhindert, dass die Spannung am betreffenden Kondensator bei entsprechenden Schalteransteuerungsmodi negativ wird, d.h. umgepolt wird.

Des Weiteren ist zu beachten, dass der Einsatz wenigstens einer zu den Kondensatoren der eingangsseitigen Kondensatorreihenschaltung parallelgeschalteten Diode, wie beschrieben, auch den Wirkungsgrad verbessert. Da eine Verbesserung des Wirkungsgrades gerade bei diesen hocheffektiven Schaltungen eine zusätzliche Verlustleistungsquelle vermeidet, kann bei dem Einsatz der erfindungsgemäßen Tiefsetzstellerschaltung, besonders, wenn diese in einer ebenfalls beanspruchten Wechselrichter-Schaltungsanordnung eingesetzt beziehungsweise verwendet wird, auf ansonsten notwendige aufwendige und auch effizienzreduzierende Kühlvorrichtungen und so weiter verzichtet werden.

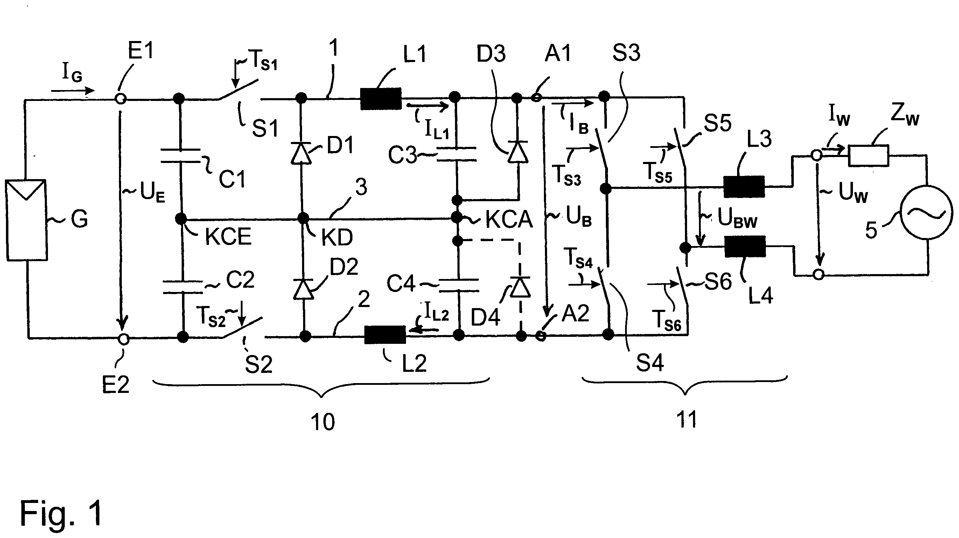

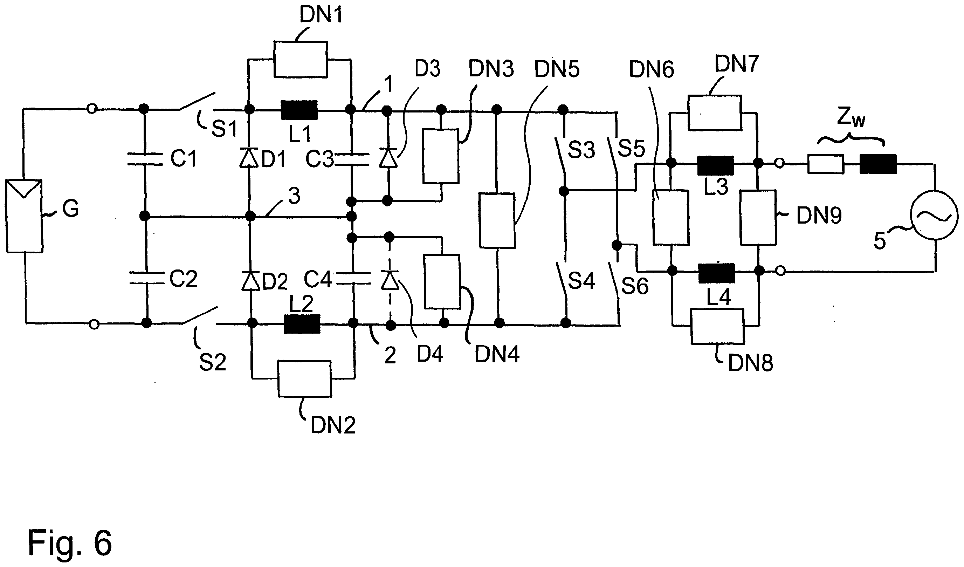

Für die tatsächliche Ausgestaltung der beschriebenen Anordnung der wenigstens einen Diode, die je einem der Kondensatoren der ausgangsseitigen Kondensatorreihenschaltung parallelgeschaltet ist sind mehrere Varianten möglich. Die ausgangsseitige Kondensatorreihenschaltung besitzt zwischen den beiden Kondensatoren einen Zwischenknoten, der mit dem Mittelzweig der Tiefsetzstellerschaltung verbunden ist. An diesem Zwischenknoten ist dann zum Beispiel (potential gleich) zu einem und/oder beiden der Kondensatoren je eine Diode parallel geschaltet, wobei bei der Anordnung von je einer Diode an den Kondensatoren, der zwischen den Dioden vorgesehene Zwischenknoten ebenfalls mit dem Mittelzweig verbunden ist. Die alternative Anordnung der zweiten Diode ist in der Zeichnung, insbesondere in Fig. 1 und 6 gestrichelt angedeutet. Die Stromflussrichtungen der Dioden, die je einem der Kondensatoren der ausgangsseitigen Kondensatorreihenschaltung parallelgeschaltet ist, ist bezogen auf den Mittelzweig jeweils antisymmetrisch, das heißt, eine erste Diode ist zwischen Mittelzweig und einem der außen liegenden Hauptzweige leitend, zum anderen Hauptzweig sperrend geschaltet.

Zur Vermeidung eines Kurzschlusses innerhalb der Schaltung ist die Anordnung der Diode/n an dem/den Kondensator/en der ausgangsseitigen Kondensatorreihenschaltung parallel- beziehungsweise gleichgerichtet zu der Diodenreihenschaltung der wenigstens zwei seriell geschalteten Dioden zwischen den beiden Hauptzweigen, die zwischen der eingangsseitigen und der ausgangsseitigen Kondensatorreihenschaltung angeordnet ist.

In einer Weiterbildung der Erfindung ist die Steuereinheit dafür eingerichtet, die getaktet ansteuerbaren Schalter der Tiefsetzstellerschaltung in vier verschiedenen Ansteuerungsmodi anzusteuern, abhängig davon, ob eine Ausgangsspannung bezogen auf eine Eingangsspannung betraglich über oder unter einem vorgebbaren Schwellwert liegt und ob es sich jeweils um eine erste oder zweite Halbschwingung der Ausgangsspannung handelt. Die dergestalt weitergebildete Tiefsetzstellerschaltung eignet sich insbesondere zur Durchführung des erfindungsgemäßen Tiefsetzstellerschaltungs-Betriebsverfahrens. Es lassen sich damit in sehr guter Näherung sinusförmige Ausgangsspannungs-Halbschwingungen mit vergleichsweise geringem Aufwand und gesteigertem Wirkungsgrad bei minimalen EMV-Problemen erzeugen. Dies kann insbesondere zu einem entsprechend vorteilhaften Betrieb der erfindungsgemäßen Wechselrichter-Schaltungsanordnung genutzt werden, die mit der erfindungsgemäßen Tiefsetzstellerschaltung ausgerüstet ist.

In einer bevorzugten Ausgestaltung der Erfindung ist vorgesehen, dass der aus zwei symmetrischen Hälften aufgebaute Tiefsetzsteller gemeinsam eine einzige Ausgangsspannung erzeugt. Durch den vorgeschlagenen Aufbau wird eine Aufteilung der Spannungsbelastung der Bauteile erreicht.

Des Weiteren ist in einer Variante der Erfindung vorgesehen, dass der aus zwei symmetrischen Hälften aufgebaute Tiefsetzsteller aus einer einzigen Eingangsspannung gespeist wird. Auch durch diese Variante wird in vorteilhafter Weise eine Verringerung der Spannungsbelastung der Bauteile erreicht.

Günstiger Weise ist vorgesehen, dass die pulsierende Gleichspannung am Ausgang des Tiefsetzstellers die Form einer SinusHalbwelle aufweist, da ausgangsseitig an der Tiefsetzstellerschaltung, insbesondere in dem Anwendungsbeispiel einer Wechselrichter-Schaltungsanordnung ein sinusförmiger Spannungsverlauf realisiert werden soll.

Dabei ist es günstig, dass sich Sinus-Halbwellen am Ausgang des Tiefsetzstellers alle 8,3 ms oder alle 10 ms wiederholen. In einer Weiterbildung der Erfindung ist des Weiteren vorgesehen, dass am Ausgang des Tiefsetzstellers eine pulsierende Gleichspannung geformt wird beziehungsweise die Gleichspannung am Ausgang des Tiefsetzstellers mit einer Frequenz von 100 Hz oder 120 Hz pulsiert. Die genannte Wiederholungszeit beziehungsweise Pulsierungsfrequenz ist auf die ausgangsseitige (Netz)-Frequenz abgestellt und beträgt entweder die halbe Periodendauer oder aber die doppelte (Netz)-Frequenz.

In einer weiteren erfindungsgemäßen Variante ist vorgesehen, dass die beiden Hälften des symmetrisch aufgebauten Tiefsetzstellers so gesteuert werden, dass hier Spannungen an den Kondensatoren der eingangsseitigen Kondensatorreihenschaltung denselben Wert annehmen oder die beiden Hälften des symmetrisch aufgebauten Tiefsetzstellers so gesteuert werden, dass die Spannungen an den Kondensatoren der eingangsseitigen Kondensatorreihenschaltung in einem bestimmten Verhältnis bleiben beziehungsweise stehen. Der symmetrische Aufbau des Tiefsetzstellers bezieht sich dabei auf den Mittelzweig.

In einer weiteren Verbesserung des Vorschlages ist vorgesehen, dass die beiden Hälften des symmetrisch aufgebauten Tiefsetzstellers so gesteuert werden, dass sie aus den Kondensatoren der eingangsseitigen Kondensatorreihenschaltung jeweils die gleiche Ladungsmenge entnehmen. Die Steuerung erfolgt vorzugsweise in der Art, dass nach jeder Halbwelle an den Kondensatoren der eingangsseitigen Kondensatorreihenschaltung jeweils die gleiche Spannung anliegt. Daraus resultiert eine geringere Spannungsbelastung für diese Kondensatoren und es besteht daher grundsätzlich die Möglichkeit, hier wenige aufwendige - und daher auch günstige - Bauteile, einzusetzen.

Des Weiteren ist vorgesehen, dass bei einer weiteren Verbesserung des Vorschlages in beiden Hälften des symmetrisch aufgebauten Tiefsetzstellers in jedem Betriebsfall die gleichen gemittelten Average-Ströme fließen (als Average-Ströme werden hierbei die Ströme verstanden, die in jedem Betriebsfall im arithmetischen Mittelwert fließen).

Soweit im Rahmen dieser Anmeldung von einem symmetrisch aufgebauten Tiefsetzsteller gesprochen wird, wird darunter immer die symmetrische Ausgestaltung bezüglich des Mittelzweiges verstanden. Die konsequent symmetrische Ausgestaltung birgt den Vorteil, dass die jeweils fließenden Ladungen in beiden Hauptzweigen gleich groß sind und daraus resultierend die Spannungsumformung gleichartig erfolgt, also ein möglichst glatter, gleichartiger Verlauf der beiden Sinus-Halbwellen der Ausgangsspannung erreicht wird.

Außerdem ist in einer bevorzugten Ausgestaltung der Erfindung vorgesehen, dass beim Übergang von einem Ansteuerungsmodus zu einem anderen Ansteuerungsmodus zeitweise beide Schalter in den beiden Hauptzweigen getaktet angesteuert werden.

In einer Weiterbildung der Erfindung ist die Wechselrichter-Schaltungsanordnung zur Ankopplung an ein Drehstromnetz ausgelegt.

In einer Weiterbildung der Erfindung realisiert die Wechselrichter-Schaltungsanordnung ein geschaltetes T-Filter, mit dem ausgangsseitig die Welligkeit des Stromverlaufs verringert werden kann.

In einer Ausgestaltung der Erfindung sind eine oder mehrere Dämpfungsglieder an entsprechenden Stellen der Wechselrichter-Schaltungsanordnung vorgesehen, die zur Bedämpfung von Resonanzstellen der T-Filterstruktur dimensioniert sind. Als Dämpfungsglied wird ein energievernichtendes Bauteil, zum Beispiel ein Widerstand oder eine Reihenschaltung einer Kapazität und einer Induktivität, gegebenenfalls zusammen mit einem Widerstand, beispielhaft angesehen. Die Anordnung ist dabei insbesondere so gewählt, dass durch die Steuereinheit der Tiefsetzstellerschaltung das Eigenschwingverhalten bei der niedrigsten Resonanzfrequenz ausgeregelt wird. Die zusätzlichen, an verschiedenen Stellen vorteilhafter Weise vorgesehenen Dämpfungsglieder bewirken, dass die höher frequenten Eigenschwingen dieser Bauteile beziehungsweise Baugruppen gedämpft werden, wodurch sich die elektromagnetische Verträglichkeit einerseits, gegebenenfalls aber auch der Wirkungsgrad andererseits verbessert.

In diesem Zusammenhang wird insbesondere darauf hingewiesen, dass alle im Bezug auf die Vorrichtung (insbesondere die transformatorlose Wechselrichter-Schaltungsanordnung) beschriebenen Merkmale und Eigenschaften aber auch Verfahrensweisen sinngemäß auch bezüglich der Formulierung des erfindungsgemäßen Verfahrens zum Betrieb einer transformatorlosen Wechselrichter-Schaltungsanordnung übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

Vorteilhafte Ausführungsformen der Erfindung sind in den Zeichnungen dargestellt und werden nachfolgend beschrieben. Hierbei zeigen:
- Fig. 1: eine Wechselrichter-Schaltungsanordnung mit Tiefsetzstellerschaltung und Polwender-/Wechselrichterbrückenschaltung,
- Fig. 2: ein Blockdiagramm einer Steuereinheit für die Tiefsetzstellerschaltung von Fig. 1,
- Fig. 3A bis 3D: vereinfachte Schaltbilddarstellungen der Tiefsetzstellerschaltung von Fig. 1 für die verschiedenen Schaltzustände ihrer beiden Schalter,
- Fig. 4: ein Zeitdiagramm zur Veranschaulichung einer Betriebsweise der Tiefsetzstellerschaltung von Fig. 1 mit verschiedenen Schalteransteuerungsmodi während zweier aufeinanderfolgender Ausgangsspannungs-Halbwellen,
- Fig. 5: ein zu Fig. 4 synchrones Zeitdiagramm zur Veranschaulichung eines typischen Verlaufs von Ausgangsspannung und Ausgangsstrom der Wechselrichter-Schaltungsanordnung von Fig. 1 mit dem Tiefsetzstellerbetrieb gemäß Fig. 4,
- Fig. 6: eine Variante der Wechselrichter-Schaltungsanordnung von Fig. 1 mit zusätzlichen Dämpfungsgliedern,
- Fig. 7: ein Stromverlaufsdiagramm entsprechend Fig. 5 für eine Betriebsvariante mit voreilender Blindstromerzeugung und
- Fig. 8: ein Stromverlaufsdiagramm entsprechend Fig. 5 für eine Betriebsvariante mit nacheilender Blindstromerzeugung.

In den Figuren sind gleiche oder einander entsprechende Elemente jeweils mit den gleichen Bezugszeichen bezeichnet und werden daher, sofern nicht zweckmäßig, nicht erneut beschrieben.

Die in Fig. 1 gezeigte Wechselrichter-Schaltungsanordnung ist von einem Typ mit dynamischem Zwischenkreis, der eine Tiefsetzstellerschaltung 10 und eine daran angekoppelte Polwender-/ Wechselrichterbrückenschaltung 11 umfasst. Die Wechselrichter-Schaltungsanordnung kann beispielsweise zur Netzankopplung eines Photovoltaik-Gleichspannungsgenerators G verwendet werden, wie in Fig. 1 exemplarisch und stellvertretend für zahlreiche andere Anwendungsmöglichkeiten gezeigt.

Die Tiefsetzstellerschaltung 10 beinhaltet zwei Hauptzweige 1, 2 jeweils zwischen einem Eingangsanschluss E1, E2 und einem Ausgangsanschluss A1, A2, in denen sich jeweils seriell ein ansteuerbarer Schalter S1, S2 und eine Induktivität bzw. Speicherdrossel L1, L2 befinden. Dabei wird zur leichteren Orientierung (ohne Beschränkung der Anmeldung hierauf) die dem Gleichspannungsgenerator G zugewandte Seite der Tiefsetzstellerschaltung 10 als Eingangsseite und die andere Seite als Ausgangsseite bezeichnet.

Eingangsseitig befindet sich vor den Schaltern S1, S2 eine erste Kondensatorreihenschaltung mit im gezeigten Beispiel zwei Kondensatoren C1, C2 zwischen den beiden Hauptzweigen 1, 2. Ebenso ist ausgangsseitig hinter den beiden Induktivitäten L1, L2 eine zweite Kondensatorreihenschaltung mit im gezeigten Beispiel zwei Kondensatoren C3, C4 zwischen die beiden Hauptzweige 1, 2 eingeschleift. Des Weiteren ist zwischen die beiden Hauptzweige 1, 2 eine Diodenreihenschaltung aus im gezeigten Beispiel zwei Dioden D1, D2 eingeschleift, wobei sich der Verknüpfungspunkt der Diodenreihenschaltung D1, D2 mit dem jeweiligen Hauptzweig 1, 2 zwischen dem betreffenden Schalter S1, S2 und der betreffenden Speicherdrossel L1, L2 befindet.
Des Weiteren weist die Tiefsetzstellerschaltung 10 einen Mittelzweig 3 auf, der einen Zwischenknoten KCE der eingangsseitigen Kondensatorreihenschaltung C1, C2 mit einem Zwischenknoten KD der Diodenreihenschaltung D1, D2 und einem Zwischenknoten KCA der ausgangsseitigen Kondensatorreihenschaltung C3, C4 verbindet, wobei er ansonsten keine weitere Verbindung zur Eingangsseite und zur Ausgangsseite der Tiefsetzstellerschaltung besitzt, insbesondere keine weitere Verbindung zu einem der Hauptzweige 1, 2. Im gezeigten Beispiel handelt es sich bei dem Mittelzweig 3 um eine feste Verbindung, in alternativen Ausführungsformen kann er aber auch durch eine schaltbare Verbindung oder allgemein mit einer Impedanz (zum Beispiel Induktivität und/oder Kapazität und/oder Widerstand) realisiert sein.

Wie erwähnt, eignet sich die Wechselrichter-Schaltungsanordnung von Fig. 1 mit der Tiefsetzstellerschaltung 10 beispielsweise zur Netzankopplung eines Photovoltaikgenerators oder von Brennstoffzellen. Im gezeigten Beispiel ist sie eingangsseitig an den Photovoltaikgenerator G und ausgangsseitig mit einer Ausgangsspannung U_{w} an ein öffentliches Stromnetz 5 angekoppelt. Anstelle des Photovoltaikgenerators G kann es sich bei der eingangsseitigen Spannungsquelle z.B. auch um den Ausgangskreis eines Hochsetzstellers handeln, wie im Fall der Anwendung für eine Netzankopplung von kleineren Brennstoffzellensystemen. Die Tiefsetzstellerschaltung 10 liefert ausgangsseitig eine Spannung U_{B}, die gleichzeitig die Eingangsspannung der angekoppelten Polwender-/Wechselrichterbrückenschaltung 11 ist, wobei auch hier wieder lediglich zur leichteren Orientierung (ohne Beschränkung der Anmeldung hierauf) die der Tiefsetzstellerschaltung 10 zugewandte Seite der Polwender-/Wechselrichterbrückenschaltung 11 als deren Eingangsseite und ihre dem Stromnetz 5 zugewandte Seite als deren Ausgangsseite bezeichnet werden. Im Betrieb liegen an den vier Kondensatoren C1 bis C4 der Tiefsetzstellerschaltung 10 jeweilige Kondensatorspannungen U_{C1}, U_{C2}, U_{C3}, U_{C4} an. Die eingangsseitige Stromstärke ist mit I_{G} bezeichnet, die über die Speicherdrosseln L1, L2 fließenden Hauptzweigströme mit I_{L1} bzw. I_{L2} und die ausgangsseitige Stromstärke mit I_{B}. Die Schalter S1, S2 werden durch zugehörige Taktsteuersignale T_{S1}, T_{S2} angesteuert.

Die Polwender-/Wechselrichterbrückenschaltung 11 umfasst in an sich bekannter Weise einen Polwender-/Vollbrückenteil mit vier ansteuerbaren Polwender-/Vollbrückenschaltern S3, S4, S5, S6, an dessen zwei Brückenabgriffe je eine Induktivität L3, L4 angekoppelt ist, an deren Eingangsseite eine entsprechende Brückenabgriffspannung U_{BW} anliegt und die ausgangsseitig die Ausgangsspannung U_{W} bereitstellen. Im Betrieb kann dadurch ein Einspeisestrom I_{W} geliefert werden, wobei symbolisch eine zugehörige Netzimpedanz Z_{W} des öffentlichen Stromnetzes 5 in Fig. 1 angegeben ist.

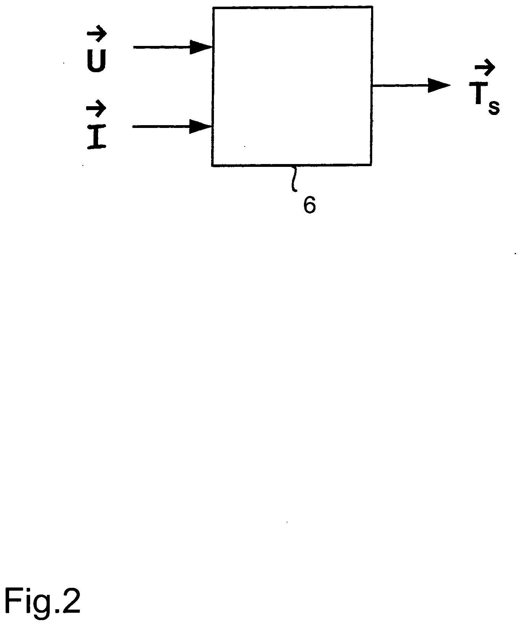

Die Steuerung bzw. Regelung der Wechselrichter-Schaltungsanordnung erfolgt vorzugsweise in Form einer Zustandsregelung, d.h. in Form einer Regelung auf die energietragenden Größen, wie Drosselströme und Kondensatorspannungen. Diese Zustandsregelung ist in einer in Fig. 2 schematisch gezeigten Steuereinheit 6 implementiert. Als Eingangsinformationen werden der Steuereinheit 6 hierzu die relevanten Spannungsinformationen, in Fig. 2 summarisch mit einem Spannungsvektor U̅ dargestellt, und Stromstärkeinformationen zugeführt, in Fig. 2 symbolisch mit einem Stromvektor I̅ dargestellt. Der Spannungsvektor U̅ beinhaltet als Komponenten insbesondere die Tiefsetzsteller-Eingangsspannung U_{E}, die Kondensatorspannungen U_{C1} bis U_{C4}, die Brückenspannung U_{B}, die Vollbrücken-Ausgangsspannung U_{BW} und die Ausgangsspannung U_{W} der Polwender-/Wechselbrückenschaltung 11. Da die Summe U_{C1}+U_{C2} der beiden eingangsseitigen Kondensatorspannungen U_{C1}, U_{C2} gleich der Eingangsspannung U_{E} ist, genügt es in alternativen Ausführungsformen, der Steuereinheit 6 nur zwei der drei Spannungsinformationen U_{E}, U_{C1}, U_{C2} zuzuführen. Ebenso genügt es in alternativen Ausführungsformen, der Steuereinheit 6 nur zwei der drei Spannungsinformationen U_{B}, U Eingangsspannung U_{E}, die Kondensatorspannungen U_{C1} bis U_{C4}, die Brückenspannung U_{B}, die Vollbrücken-Ausgangsspannung U_{BW} und die Ausgangsspannung U_{W} der Polwender-/Wechselbrückenschaltung 11. Da die Summe U_{C1}+U_{C2} der beiden eingangsseitigen Kondensatorspannungen U_{C1}, U_{C2} gleich der Eingangsspannung U_{E} ist, genügt es in alternativen Ausführungsformen, der Steuereinheit 6 nur zwei der drei Spannungsinformationen U_{E}, U_{C1}, U_{C2} zuzuführen. Ebenso genügt es in alternativen Ausführungsformen, der Steuereinheit 6 nur zwei der drei Spannungsinformationen U_{B}, U_{C3}, U_{C4} zuzuführen, da die Summe U_{C3}+U_{C4} der beiden ausgangsseitigen Kondensatorspannungen U_{C3}, U_{C4} gleich der Brückenspannung U_{B} ist. Der Stromvektor I̅ beinhaltet als Komponenten insbesondere die Eingangsstromstärke I_{G}, die Tiefsetzsteller-Drosselströme I_{L1}, I_{L2}, den Vollbrücken-Eingangsstrom bzw. Brückenstrom I_{B} und den Ausgangsstrom I_{W} der Polwender-Wechselrichterbrückenschaltung 11. In weiteren alternativen Ausführungsformen werden eine oder mehrere der Zustandsgrößen nicht durch Messung gewonnen, sondern von einem entsprechenden sogenannten Streckenbeobachter generiert. Dies ist insbesondere für nur schwer zu messende Zustandsgrößen zweckmäßig.

Aus den Eingangsinformationen gewinnt die Steuereinheit 6 die für die Zustandsregelung des Systems erforderlichen Ausgangsinformationen bzw. Steuersignale, insbesondere die Ansteuertaktsignale T_{S1}, T_{S2} für die beiden Tiefsetzsteller-Schalter S1, S2 und Ansteuertaktsignale T_{S3}, T_{S4}, T_{S5}, T_{S6} für die vier Vollbrückenschalter S3 bis S6. In Fig. 2 sind diese sechs Ansteuertaktsignale symbolisch durch einen Ansteuertaktsignalvektor I̅_{S} repräsentiert. Im Übrigen ist die Steuereinheit 6 von einem für den genannten Anwendungszweck üblichen, dem Fachmann geläufigen Aufbau, was hier folglich keiner näheren Erläuterungen bedarf.

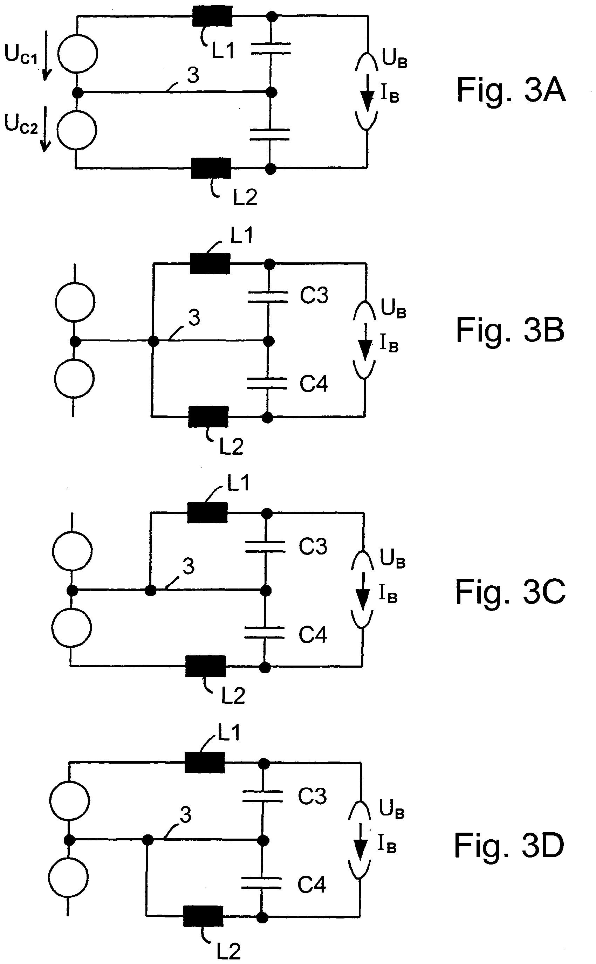

Zur Ansteuerung der beiden Tiefsetzstellerschalter S1, S2 benutzt die Steuereinheit 6 als Eingangsinformationen insbesondere die Brückenspannung U_{B}, die Eingangsspannung U_{E} und die Kondensatorspannungen U_{C1} bis U_{C4}. Anhand dieser Eingangsinformationen gibt sie die Ansteuertaktsignale T_{S1}, T_{S2} für die beiden Schalter S1, S2 ab. Eine günstige Auslegungs- und Steuerungsstrategie für die Tiefsetzstellerschaltung 10 besteht darin, die Änderungen der Brückenspannung U_{B} bei den Taktumschaltvorgängen der Schalter S1, S2 möglichst klein zu halten, da dies die Stromänderungen in den Drosseln L1, L2 entsprechend gering hält. Dazu trägt neben einer günstigen, nachfolgend in Verbindung mit den Fig. 3A bis 3D erläuterten Schalteransteuerungsstrategie der Mittelzweig 3 bei, der die Zwischenknoten KCE, KCA, KD der beiden Kondensatorreihenschaltungen C1, C2 bzw. C3, C4 und der Diodenreihenschaltung D1, D2 miteinander verbindet, ohne eine anderweitige Verbindung zur Eingangsseite oder Ausgangsseite bzw. zu einem der Hauptzweige 1, 2 zu schaffen.

In einer vorteilhaften schaltungstechnischen Realisierung sind für die eingangsseitige und/oder die ausgangsseitige Kondensatorreihenschaltung jeweils zwei Kondensatoren C1, C2 bzw. C3, C4 gleicher Kapazität gewählt, so dass dann beispielsweise am eingangsseitigen Zwischenknoten KCE die Hälfte der Eingangsspannung U_{E} anliegt. In alternativen Ausführungsformen sind auch Kondensatoren unterschiedlicher Kapazität oder mehr als zwei Kondensatoren für die jeweilige Kondensatorreihenschaltung möglich, und analog sind in alternativen Ausführungsformen mehr als zwei Dioden für die Diodenreihenschaltung möglich. In Fällen mit mehr als zwei Kondensatoren und/oder mehr als zwei Dioden in der betreffenden Kondensator- bzw. Diodenreihenschaltung können auf Wunsch auch mehrere Mittelzweige zur Verbindung je dreier Zwischenknoten der Kondensatorreihenschaltungen und der Diodenreihenschaltung vorgesehen sein.

Die Fig. 3A bis 3D veranschaulichen in schematischen, vereinfachten Schaltbilddarstellungen den Betrieb und die Funktionsweise der Tiefsetzstellerschaltung 10 von Fig. 1 für die vier möglichen unterschiedlichen Stellungen der beiden Taktschalter S1, S2 für die eine, z.B. positive Stromflussrichtung.

Im Betriebszustand von Fig. 3A, nachstehend als Zustand A bezeichnet, sind die beiden Schalter S1, S2 geschlossen. In diesem Zustand A sperren die beiden Dioden D1, D2, d.h. die Diodenreihenschaltung D1, D2 bildet keinen aktiven Strompfad und ist daher in Fig. 3A nicht dargestellt. Eine zwischen den Hauptzweigen 1, 2 auf Höhe vor den beiden Drosseln L1, L2 anstehende Spannung U_{D}, vorliegend auch als eine Zwischenkreisspannung bezeichnet, ist daher gleich der Eingangsspannung U_{E}.

Im Betriebszustand von Fig. 3B, nachfolgend als Zustand B bezeichnet, sind beide Schalter S1, S2 geöffnet bzw. unterbrochen, wodurch die beiden Dioden D1, D2 leitend sind. Dies bedeutet, dass die Zwischenkreisspannung U_{D} praktisch den Wert Null annimmt.

Im Betriebszustand von Fig. 3C, nachfolgend als Zustand C bezeichnet, ist der erste Schalter S1 geöffnet bzw. unterbrochen, während der zweite Schalter S2 geschlossen bzw. leitend ist. In diesem Fall sperrt die zwischen dem Mittelzweig 3 und dem geschlossenen Schalter S2 liegende Diode D2, während die andere Diode D1 leitet. Damit ist ein Zwischenkreisstrompfad gebildet, in welchem sich der zwischen dem Mittelzweig 3 und dem geschlossenen Schalter S2 liegende Kondensator C2 befindet, so dass die Zwischenkreisspannung U_{D} gleich der Spannung U_{C2} über diesem Kondensator C2 und damit gleich einem entsprechenden Bruchteil der Eingangsspannung U_{E} ist.

Im Betriebszustand von Fig. 3D, nachfolgend als Zustand D bezeichnet, ist spiegelbildlich zum Zustand C der erste Schalter S1 geschlossen bzw. leitend, während der zweite Schalter S2 geöffnet bzw. gesperrt ist. Dementsprechend sperrt die Diode D1 zwischen dem geschlossenen ersten Schalter S1 und dem Mittelzweig 3, während die andere Diode D2 leitet, so dass sich wiederum über den Mittelzweig 3 ein Zwischenkreisstrompfad bildet, in welchem sich in diesem Fall der zwischen dem geschlossenen Schalter S1 und dem Mittelzweig 3 liegende Kondensator C1 befindet. Die Zwischenkreisspannung U_{D} nimmt folglich den Wert der Spannung U_{C1} über diesem Kondensator C1 an.

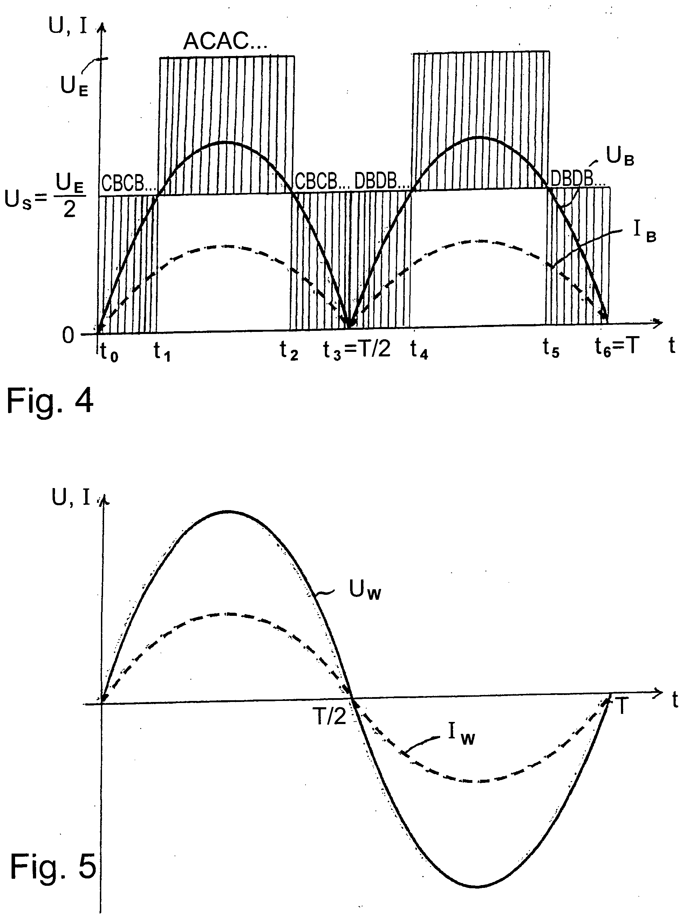

Die Tiefsetzstellerschaltung 10 kann gesteuert von der Steuereinheit 6 durch geeignet getaktete Wechsel zwischen den vier Schalt-/Betriebszuständen A, B, C, D der Fig. 3A bis 3D in verschiedenen Ansteuerungsmodi betrieben werden. Die Fig. 4 und 5 veranschaulichen einen praktischen Einsatzfall für die erwähnte Netzankopplung des Photovoltaikgenerators G gemäß Fig. 1. Dabei ist stellvertretend die Betriebsweise für zwei aufeinanderfolgende Halbwellen der Brückenspannung U_{B} bzw. der Ausgangsspannung U_{W} der Wechselrichter-Schaltungsanordnung im Zeitdiagramm dargestellt. Wie aus den Fig. 4 und 5 ersichtlich, wird die Taktungsfolge für die beiden Schalter S1, S2 abhängig davon gewählt, ob der Momentanwert der Brückenspannung U_{B} betraglich über oder unter einem vorgebbaren Schwellwert U_{S} liegt, wobei im gezeigten Beispiel exemplarisch als Schwellwert die halbe Eingangsspannung U_{E}/2 gewählt ist. Dieser Schwellwert U_{S} entspricht dem Spannungswert, den die Zwischenkreisspannung U_{D} in den Betriebszuständen C und D einnimmt.

Ausgehend vom Spannungsnulldurchgang zu einem Zeitpunkt t₀ werden die beiden Schalter S1, S2 in einem Anfangsintervall [t₀,t₁] der ersten Brückenspannungs-Halbwelle von der Steuereinheit 6 mit der zyklisch wiederholten Zustandsfolge CBCB getaktet angesteuert, d.h. es wird mit der entsprechenden Taktfrequenz zwischen dem Zustand C von Fig. 3C und dem Zustand B von Fig. 3B wiederholt umgeschaltet. Konkret bedeutet dies, dass in diesem ersten Ansteuerungsmodus der Schalter S1 geöffnet gehalten wird und der Schalter S2 getaktet geöffnet und geschlossen wird. Dieser erste Ansteuerungsmodus wird beibehalten, bis zum Zeitpunkt t₁ der Brückenspannungs-Momentanwert den Schwellwert U_{S} erreicht.

In einem anschließenden Mittelintervall [t₁,t₂] der ersten Brückenspannungs-Halbwelle, während dem der Brückenspannungs-Momentanwert über dem Schwellwert U_{S} liegt, wechselt die Steuereinheit 6 in einen zweiten Schalteransteuerungsmodus mit der zyklisch wiederholten Zustandsfolge ACAC, d.h. die Schalter S1, S2 werden so angesteuert, dass wiederholt vom Zustand A der Fig. 3A zum Zustand C der Fig. 3C und wieder zurückgeschaltet wird. Konkret bedeutet dies, dass im zweiten Ansteuerungsmodus der Schalter S2 geschlossen gehalten wird, während der Schalter S1 getaktet geöffnet und geschlossen wird.

Sobald der Brückenspannungs-Momentanwert zum Zeitpunkt t₂ den Schwellwert U_{S} wieder unterschreitet, wechselt die Steuereinheit 6 für ein Endintervall [t₂,t₃] der ersten Brückenspannungs-Halbschwingung wieder in den ersten Ansteuerungsmodus, d.h. bis der Brückenspannungs-Momentanwert zum Zeitpunkt t₃ der halben Periodendauer T/2 der wieder auf null ist.

Anschließend steuert die Steuereinheit 6 für ein Anfangsintervall [t₃,t₄] der zweiten Brückenspannungs-Halbschwingung die beiden Schalter S1, S2 in einem dritten Ansteuerungsmodus mit der zyklisch wiederholten Zustandsfolge DBDB an. Dies bedeutet, dass der Schalter S2 geöffnet gehalten wird und der Schalter S1 getaktet geöffnet und geschlossen wird.

Sobald zum Zeitpunkt t₄ der Brückenspannungs-Momentanwert den Schwellwert U_{S} für die zweite Brückenspannungs-Halbschwingung überschreitet, wählt die Steuereinheit 6 für ein entsprechendes Mittelintervall [t₄,t₅] der zweiten Brückenspannungs-Halbschwingung einen vierten Schalteransteuerungsmodus mit der zyklisch wiederholten Zustandsfolge ADAD, d.h. in diesem vierten Ansteuerungsmodus wird der Schalter S1 geschlossen gehalten, während der Schalter S2 getaktet geöffnet und geschlossen wird.

Sobald zum Zeitpunkt t₅ der Brückenspannungs-Momentanwert wieder unter den Schwellwert U_{S} fällt, wechselt die Steuereinheit 6 für ein Endintervall [t₅,t₆] der zweiten Halbschwingung wieder in den dritten Ansteuerungsmodus zurück, bis der Brückenspannungs-Momentanwert zum Zeitpunkt t₆ der vollen Periodendauer T wieder auf null ist. Damit ist eine Periode der Bereitstellung von zwei aufeinanderfolgenden Halbschwingungen der von der Tiefsetzstellerschaltung 10 gelieferten Brückenspannung U_{B} abgeschlossen, und die Steuereinheit 6 wechselt dann für die nächste Spannungsperiode wieder in den ersten Ansteuerungsmodus zur Ansteuerung der beiden Schalter S1, S2. In Fig. 4 ist ergänzend der zur Brückenspannung U_{B} synchrone Verlauf der Brückenstromstärke I_{B} gestrichelt illustriert.

Fig. 5 zeigt die durch die Polwender-/Wechselbrückenschaltung 11 aus der eingangsseitigen Brückenspannung U_{B} und dem eingangsseitigen Brückenstrom I_{B} gelieferte Ausgangsspannung U_{W} und den zugehörigen Ausgangsstrom I_{W}, wobei diese elektrischen Ausgangsgrößen unter Umklappen der Polarität der zweiten Halbschwingungen der Brückenspannung U_{B} und des Brückenstroms I_{B} generiert werden. Dies erfolgt in an sich bekannter Weise und bedarf daher hier keiner näheren Ausführungen. Speziell werden dazu die Vollbrücken-/Polwenderschalter S3 bis S6 diagonal geschaltet, d.h. die Schalter S3 und S6 werden miteinander synchron und gegenphasig zu den untereinander ebenfalls synchron getakteten Schaltern S4, S5 geschaltet. Es versteht sich, dass in den Fig. 4 und 5 nur die primär relevanten Grundschwingungsanteile der Spannungen und Ströme gezeigt sind, denen in der Praxis noch eine gewisse Welligkeit insbesondere durch die Umschaltvorgänge der Schalter S1 und S2 überlagert sein kann. Typische Schaltertaktfrequenzen für die Schalter S1, S2 liegen in der Größenordnung von 20kHz, können vorliegend aber auch deutlich höher gewählt werden, z.B. bis zu mehreren 100kHz. Dazu trägt unter anderem bei, dass sich die Tiefsetzstellerschaltung 10 so takten lässt, dass der Zwischenkreisspannungshub nur gleich der halben Eingangsspannung ist. Dadurch können z.B. zur Ankopplung eines Photovoltaikgenerators, der Eingangsspannungen U_{E} im Bereich zwischen 350V und 1000V liefert, ohne weiteres schnell schaltende, verlustarme Leistungshalbleiter z.B. vom MOSFET-Typ für die Schalter S1, S2 sowie SiC-Dioden für die Dioden D1, D2 eingesetzt werden, die jeweils bis ca. 600V spannungsfest sind. Ein Einsatz von Leistungshalbleitern, wie IGBT-Schaltern und -Dioden, mit deutlich höherer Spannungsfestigkeit von z.B. 1200V ist nicht zwingend. Dadurch kann gegenüber herkömmlichen Tiefsetzstellerschaltungen, die derart hochspannungsfeste Leistungshalbleiter verwenden, die Schaltgeschwindigkeit gesteigert werden. Durch die Halbierung des Zwischenkreisspannungshubs lässt sich zudem das Bauvolumen der magnetischen Bauelemente, insbesondere der Speicherdrosseln L1 und L2, deutlich verringern, z.B. um einen Faktor von etwa zehn bis etwa zwanzig. Es zeigt sich überdies, dass Aufbau und Betriebsweise der Wechselrichter-Schaltungsanordnung von Fig. 1 und insbesondere von deren Tiefsetzstellerschaltung 10 einen vergleichsweise hohen Wirkungsgrad ermöglichen und nur relativ geringe EMV-Probleme verursachen.

Die Wechselrichter-Schaltungsanordnung von Fig. 1 ist von einem Typ mit geschaltetem T-Filter, auch LCL-Filter bezeichnet, das bekanntermaßen dazu dient, die Welligkeit des Stromverlaufs zur Ausgangsseite der Schaltungsanordnung hin zu verringern. Diesem Zweck dienen z.B. die ausgangsseitigen Induktivitäten L3, L4. Bei geeigneter Dimensionierung des T-Filters mit den Induktivitäten L3, L4 optional magnetisch gekoppelt sein können, sind die Filtereigenschaften der Schaltungsanordnung verbessert, was wiederum den Einsatz von Taktschaltern mit reduzierter, z.B. halbierter, Spannungsfestigkeit von beispielsweise nur etwa 600V begünstigt.

Fig. 6 zeigt eine Variante der Schaltungsanordnung von Fig. 1, die sich von dieser nur darin unterscheidet, dass zusätzliche Dämpfungsglieder DN1 bis DN9 an ausgewählten Stellen des Schaltungsaufbaus vorgesehen sind. Speziell ist ein erstes Dämpfungsglied DN1 der Drossel L1 parallel geschaltet, ein zweites Dämpfungsglied DN2 ist der Drossel L2 parallel geschaltet, je ein Dämpfungsglied DN3, DN4 ist den Kondensatoren C3, C4 parallel geschaltet, ein Dämpfungsglied DN5 ist an der Ausgangsseite der Tiefsetzstellerschaltung 10 zwischen die Hauptzweige 1, 2 eingeschleift, ein Dämpfungsglied DN6 ist zwischen die Eingänge der ausgangsseitigen Induktivitäten L3, L4 eingeschleift, je ein Dämpfungsglied DN7, DN8 ist diesen Induktivitäten L3, L4 parallel geschaltet und ein Dämpfungsglied DN9 ist zwischen die Ausgänge dieser Induktivitäten L3, L4 eingeschleift. Jedes dieser Dämpfungsglieder DN1 bis DN9 kann durch irgendein herkömmliches passives Dämpfungsnetzwerk unter Verwendung von Induktivitäten, Kondensatoren, linearen und/oder nichtlinearen Widerständen realisiert sein. Die Dämpfungsglieder DN1 bis DN9 dienen zur Bedämpfung von Resonanzstellen der T-Filterstruktur der Wechselrichter-Schaltungsanordnung. Dies unterstützt die Resonanzunterdrückung, die im Übrigen durch die in der Steuereinheit 6 implementierte Zustandsregelung des Systems und insbesondere für den Einspeisestrom I_{W} bewirkt wird. Die Dämpfungsglieder DN1 bis DN9 können den resonanzdämpfenden Beitrag der Zustandsregelung geeignet in erforderlicher Weise ergänzen, wenn die regelungstechnische Behandlung der Resonanzstellen durch aktive Ausregelung im Rahmen der Zustandsregelung allein nicht ausreichend erscheint bzw. erschwert ist, z.B. wegen der im Allgemeinen variablen Netzimpedanz Z_{W}. Es versteht sich, dass in alternativen Ausführungsformen auch nur ein Teil der in Fig. 6 gezeigten Dämpfungsglieder vorgesehen sein kann. Der Einsatz von einigen Dämpfungsgliedern DN3, DN4 und DN5 ist hervorzuheben, da mit diesen bereits in großer Effektivität in der Unterdrückung von unerwünschten Schwingungen erreicht wird. Dabei handelt es sich insbesondere um die Dämpfungsglieder DN3, DN4, die den Kondensatoren C3, C4 der ausgangsseitigen Kondensatorreihenschaltung parallel angeordnet sind, also eine Verbindung des Mittelzweiges 3 zu den jeweiligen Hauptzweigen 1, 2 im Bereich der Kondensatoren C3, C4 der ausgangsseitigen Kondensatorreihenschaltung darstellen. Hervorzuheben ist dabei auch das Dämpfungsglied DN5, welches ausgangsseitig des Tiefsetzstellers zwischen den beiden Hauptzweigen 1, 2 angeordnet ist.

Der erfindungsgemäße Effekt wird bereits mit einem der vorgenannten Dämpfungsglieder DN3, DN4, DN5 erreicht. Bei mehrfacher Ausführung erhöht sich der Nutzen entsprechend.

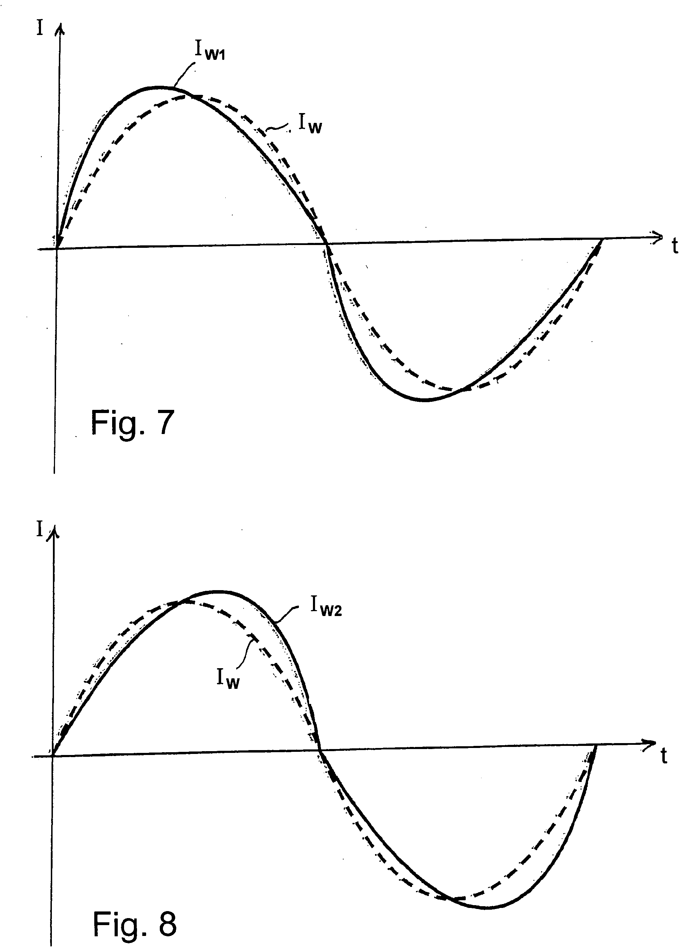

Die erfindungsgemäße Wechselrichter-Schaltungsanordnung kann bei Bedarf blindstromfähig betrieben werden, d.h. durch Wahl eines entsprechenden Ansteuerungsmodus für die getaktet steuerbaren Schalter kann durch Verschiebung des Flächenschwerpunkts der Sinuswellenform des einzuspeisenden Stroms ein Blindstromanteil erzeugt werden, ggf. begleitet von einer geringfügigen Erhöhung der Verzerrungsstromanteils bzw. Klirrfaktors. Die Figuren 7 und 8 veranschaulichen entsprechende Betriebsvarianten im Strom/Zeit-Diagramm. Zu Vergleichszwecken ist in den beiden Diagrammen der ideal sinusförmige Einspeisestrom I_{W}, wie er auch im Diagramm von Fig. 5 dargestellt ist, für den blindstromfreien Betriebsfall, in dem nur Wirkleistung erzeugt wird, gestrichelt wiedergegeben.

Fig. 7 zeigt einen Einspeisestrom I_{W1} als Ausgangsstrom der Polwender-/-Wechselbrückenschaltung für eine Betriebsvariante, bei der durch Vorverschiebung des Flächenschwerpunkts der Strom-Sinusform ein Einspeisestrom I_{W1} mit voreilendem, kapazitivem Blindstromanteil bereitgestellt wird. Analog zeigt Fig. 8 die Kennlinie eines Einspeisestroms I_{W2} mit einem nacheilenden, induktiven Blindstromanteil. Dieser Einspeisestrom I_{W2} wird durch Spätverschieben des Flächenschwerpunkts der Strom-Sinusform generiert. Beide Einspeisestromvarianten I_{W1}, I_{W2} mit voreilendem, kapazitivem Blindstromanteil bzw. nacheilendem, induktivem Blindstromanteil können durch entsprechende Betriebsweise der erfindungsgemäßen Wechselrichter-Schaltungsanordnung z.B. mit der in Fig. 1 oder 6 gezeigten Topologie realisiert werden, insbesondere durch entsprechende Ansteuerung der Schalter S1 bis S6.

Wie die obigen Erläuterungen anhand exemplarischer Ausführungsbeispiele deutlich machen, stellt die Erfindung eine Tiefsetzstellerschaltung zur Verfügung, die in sehr vorteilhafter Weise und mit vergleichsweise hohem Wirkungsgrad betrieben werden kann, der insbesondere noch höher sein kann als er durch die in der DE 10 2005 047 373 A1 offenbarte Tiefsetzstellerschaltung erzielbar ist. Im Übrigen gelten die dort erwähnten Vorteile und funktionellen Eigenschaften in gleicher Weise für die vorliegende Schaltungsanordnung, soweit sie in ihrem Schaltungsaufbau und ihrer Funktionsweise übereinstimmen. Der erhöhte Wirkungsgrad lässt sich insbesondere durch die spezielle Ansteuerung der Tiefsetzstellerschalter erzielen, wie oben zu Fig. 4 erläutert, die ihrerseits durch das zusätzliche Anordnen der ausgangsseitigen Kondensatorreihenschaltung und der durch Verbindung des Mittelzweigs zu dieser ausgangsseitigen Kondensatorreihenschaltung ermöglicht wird. Der erhöhte Wirkungsgrad geht auch zurück auf die wenigstens eine Diode, die je einem der Kondensatoren der ausgangsseitigen Kondensatorreihenschaltung parallelgeschaltet ist. Dem Einsatz dieser Dioden ist eine Verbesserung des Wirkungsgrades von circa 0,2 % absolut zuzurechnen. Weiter trägt zu einem erhöhten Wirkungsgrad eine vergleichsweise geringe mittlere Spannungs-/Zeitfläche über den Drosseln L1, L2 bei. Dies ermöglicht in Verbindung mit der Wahl geeigneter Drosselkernmaterialien ein optimiertes Design in Bezug auf Kern- und Wicklungsverluste.

Durch den erfindungsgemäßen Vorschlag wurde die für die in Frage stehenden Wechselrichter-Schaltungsanordnungen typischen Wirkungsgrade von circa 97 % (Stand der Technik vor Erfindung) erheblich gesteigert. So erreicht die erfindungsgemäße Ausgestaltung einen Spitzenwert von bis zu 99 % ! Das heißt, der Anteil an Verlustwärme, der gegebenenfalls mit aufwändigen Maßnahmen zu kühlen ist, verringert sich mit der Erfindung um zwei Drittel!

## Patentansprüche

1. Transformatorlose Wechselrichter-Schaltungsanordnung, aufweisend
- eine Tiefsetzstellerschaltung (10) mit
- einer Eingangsseite mit zwei Eingangsanschlüssen (E1, E2), einer Ausgangsseite mit zwei Ausgangsanschlüssen (A1, A2) und je einem Hauptzweig (1, 2) zwischen einem der Eingangsanschlüsse und einem der Ausgangsanschlüsse,
- einer eingangsseitigen Kondensatorreihenschaltung mit wenigstens zwei seriell geschalteten Kondensatoren (C1, C2) zwischen den beiden Hauptzweigen (1, 2),
- einer ausgangsseitigen Kondensatorreihenschaltung mit wenigstens zwei seriell geschalteten Kondensatoren (C3, C4) zwischen den beiden Hauptzweigen,
- einer zwischen der eingangsseitigen und der ausgangsseitigen Kondensatorreihenschaltung angeordneten Diodenreihenschaltung mit wenigstens zwei seriell geschalteten Dioden (D1, D2) zwischen den beiden Hauptzweigen,
- einem Mittelzweig (3), der ohne weitere Verbindung zur Eingangsseite und zur Ausgangsseite einen Zwischenknoten (KCE) der eingangsseitigen Kondensatorreihenschaltung mit einem Zwischenknoten (KD) der Diodenreihenschaltung und einem Zwischenknoten (KCA) der ausgangsseitigen Kondensatorreihenschaltung verbindet,
- je einer Speicherdrossel (L1, L2) in den beiden Hauptzweigen zwischen der Diodenreihenschaltung und der ausgangsseitigen Kondensatorreihenschaltung,
- wenigstens einer Diode (D3, D4), die je einem der Kondensatoren (C3, C4) der ausgangsseitigen Kondensatorreihenschaltung parallel geschaltet ist,
- je einem getaktet ansteuerbaren Schalter (S1, S2) in den beiden Hauptzweigen zwischen der eingangsseitigen Kondensatorreihenschaltung und der Diodenreihenschaltung, und
- einer Steuereinheit (6) zur Ansteuerung der Schalter in einem Schalteransteuerungsmodus, bei dem sie die beiden Schalter zu unterschiedlichen Zeitpunkten und/oder in unterschiedliche Schaltstellungen schaltet; und
- eine Polwender-/Wechselrichterbrückenschaltung (11), die an die Ausgangsanschlüsse der Tiefsetzstellerschaltung angekoppelt ist.

2. Transformatorlose Wechselrichter-Schaltungsanordnung nach Anspruch 1, **dadurch gekennzeichnet, dass** die Steuereinheit dafür eingerichtet ist, die Schalter abhängig davon, ob eine periodisch aus einer ersten und einer zweiten Halbwelle aufgebaute Ausgangsspannung (UW) an den Ausgangsanschlüssen bezogen auf eine Eingangsspannung (UE) an den Eingangsanschlüssen betraglich über oder unter einem vorgebbaren Schwellwert liegt und ob es sich jeweils um die erste oder die zweite Halbwelle handelt, in vier verschiedenen Ansteuerungsmodi anzusteuern, wobei in einem ersten Ansteuerungsmodus ein erster Schalter (S1) der beiden Schalter geöffnet bleibt und der zweite Schalter (S2) getaktet umgeschaltet wird, in einem zweiten Ansteuerungsmodus der zweite Schalter (S2) geschlossen bleibt und der erste Schalter (S1) getaktet umgeschaltet wird, in einem dritten Ansteuerungsmodus der zweite Schalter (S2) geöffnet bleibt und der erste Schalter (S1) getaktet umgeschaltet wird und in einem vierten Ansteuerungsmodus der erste Schalter (S1) geschlossen bleibt und der zweite Schalter (S2) getaktet umgeschaltet wird.

3. Transformatorlose Wechselrichter-Schaltungsanordnung nach einem der Ansprüche 1 oder 2, **dadurch gekennzeichnet, dass** die aus zwei symmetrischen Hälften aufgebaute Tiefsetzstellerschaltung gemeinsam eine einzige Ausgangsspannung erzeugt und/oder die aus zwei symmetrischen Hälften aufgebaute Tiefsetzstellerschaltung aus einer einzigen Eingansspannung gespeist wird.

4. Transformatorlose Wechselrichter-Schaltungsanordnung nach einem der Ansprüche 1 bis 3, **dadurch gekennzeichnet, dass** die pulsierende Gleichspannung am Ausgang der Tiefsetzstellerschaltung die Form einer Sinushalbwelle aufweist und/oder sich Sinushalbwellen am Ausgang der Tiefsetzstellerschaltung alle 8,3ms oder alle 10ms wiederholen.

5. Transformatorlose Wechselrichter-Schaltungsanordnung nach einem der Ansprüche 1 bis 4, **dadurch gekennzeichnet, dass** am Ausgang der Tiefsetzstellerschaltung eine pulsierende Gleichspannung geformt wird und/oder die Gleichspannung am Ausgang der Tiefsetzstellerschaltung mit einer Frequenz von 100Hz oder 120 Hz pulsiert.

6. Transformatorlose Wechselrichter-Schaltungsanordnung nach einem der Ansprüche 1 bis 5, **dadurch gekennzeichnet, dass** die beiden Hälften der symmetrisch aufgebauten Tiefsetzstellerschaltung so gesteuert werden, dass die Spannungen an den Kondensatoren (C1, C2) der eingangsseitigen Kondensatorreihenschaltung den selben Wert annehmen oder die beiden Hälften der symmetrisch aufgebauten Tiefsetzstellerschaltung so gesteuert werden, dass die Spannungen an den Kondensatoren (C1, C2) der eingangsseitigen Kondensatorreihenschaltung in einem bestimmten Verhältnis bleiben und/oder die beiden Hälften der symmetrisch aufgebauten Tiefsetzstellerschaltung so gesteuert werden, dass sie aus den Kondensatoren (C1, C2) der eingangsseitigen Kondensatorreihenschaltung jeweils die gleiche Ladungsmenge entnehmen.

7. Transformatorlose Wechselrichter-Schaltungsanordnung nach einem der Ansprüche 1 bis 6, **dadurch gekennzeichnet, dass** an zumindest einem Kondensator (C3, C4) der ausgangsseitigen Kondensatorreihenschaltung je ein Dämpfungsglied (DN3, DN4) parallel angeordnet ist und/oder ausgangsseitig der Tiefsetzstellerschaltung zwischen den beiden Hauptzweigen (1, 2) ein Dämpfungsglied (DN5) angeordnet ist.

8. Transformatorlose Wechselrichter-Schaltungsanordnung nach einem der Ansprüche 1 bis 7, **dadurch gekennzeichnet, dass** in beiden Hälften der symmetrisch aufgebauten Tiefsetzstellerschaltung in jedem Betriebsfall die gleichen gemittelten-/average-Ströme fließen und/oder beim Übergang von einem Ansteuermodus zu einem anderen Ansteuermodus zeitweise beide Schalter S1 und S2 getaktet angesteuert werden.

9. Transformatorlose Wechselrichter-Schaltungsanordnung nach einem der Ansprüche 1 bis 8, **dadurch gekennzeichnet, dass** sie zur Netzankopplung eines Photovoltaikgenerators oder eines Brennstoffzellensystems ausgebildet ist.

10. Transformatorlose Wechselrichter-Schaltungsanordnung nach einem der Ansprüche 1 bis 9, **dadurch gekennzeichnet, dass** sie zur Ankopplung mehrerer paralleler eingangsseitiger Spannungsgeneratoren, insbesondere Photovoltaikgeneratoren, an ein Drehstromnetz eingerichtet ist, und dabei jedem Spannungsgenerator eine Tiefsetzstellerschaltung zugeordnet ist, die ausgangsseitig parallel an eine Drehstrom-Wechselrichterbrückeneinheit angekoppelt sind.

11. Transformatorlose Wechselrichter-Schaltungsanordnung nach einem der Ansprüche 1 bis 10, **dadurch gekennzeichnet, dass** sie einen Aufbau mit geschaltetem T-Filter aufweist und die Polwender-/ Wechselrichterbrückenschaltung dazu je eine Induktivität (L3, L4) in zwei parallelen Ausgangszweigen aufweist.

12. Transformatorlose Wechselrichter-Schaltungsanordnung nach einem der Ansprüche 1 bis 11, **dadurch gekennzeichnet, dass** ein jeweiliges Dämpfungsglied (DN1 bis DN9), das zur Resonanzdämpfung der T-Filterstruktur dimensioniert ist, wenigstens einer der beiden Speicherdrosseln (L1, L2) der Tiefsetzstellerschaltung parallel geschaltet ist und/oder ausgangsseitig zwischen die beiden Hauptzweige der Tiefsetzstellerschaltung eingeschleift ist.

13. Verfahren zum Betrieb einer transformatorlosen Wechselrichter-Schaltungsanordnung gemäß einem der Ansprüche 1 bis 12, **gekennzeichnet durch** folgende Taktung der getaktet ansteuerbaren Schalter (S1, S2) zur Bereitstellung einer periodisch aus einer ersten und einer zweiten Halbwelle aufgebauten Ausgangsspannung (UW) aus einer Eingangsspannung (UE):
- während eines Anfangsintervalls ([t0, t1]) der ersten Halbwelle, während dem die Ausgangsspannung bezogen auf die Eingangsspannung unter einem vorgebbaren Schwellwert liegt, Ansteuern der beiden Schalter in einem ersten Ansteuerungsmodus, in welchem ein erster (S1) der beiden Schalter geöffnet gehalten und der zweite Schalter (S2) getaktet umgeschaltet wird,
- während eines an das Anfangsintervall anschließenden Mittelintervalls ([t1,t2]) der ersten Halbwelle, während dem die Ausgangsspannung über dem Schwellwert liegt, Ansteuern der Schalter in einem zweiten Ansteuerungsmodus, in welchem der erste Schalter (S1) getaktet umgeschaltet und der zweite Schalter (S2) geschlossen gehalten wird,
- während eines an das Mittelintervall anschließenden Endintervalls ([t2, t3]) der ersten Halbwelle, während dem die Ausgangsspannung unter dem Schwellwert liegt, Ansteuern der Schalter im ersten Ansteuerungsmodus,
- während eines an das Endintervall der ersten Halbwelle anschließenden Anfangsintervalls ([t3,t4]) der zweiten Halbwelle, während dem die Ausgangsspannung unter dem Schwellwert liegt, Ansteuern der Schalter in einem dritten Ansteuerungsmodus, in welchem der erste Schalter (S1) getaktet umgeschaltet und der zweite Schalter (S2) geöffnet gehalten wird,
- während eines an das Anfangsintervall der zweiten Halbwelle anschließenden Mittelintervalls ([t4,t5]) der zweiten Halbwelle, während dem die Ausgangsspannung über dem Schwellwert liegt, Ansteuern der Schalter in einem vierten Ansteuerungsmodus, in welchem der erste Schalter (S1) geschlossen gehalten und der zweite Schalter (S2) getaktet umgeschaltet wird, und
- während eines an das Mittelintervall der zweiten Halbwelle anschließenden Endintervalls ([t5,t6]) der zweiten Halbwelle, während dem die Ausgangsspannung unter dem Schwellwert liegt, Ansteuern der Schalter im dritten Ansteuerungsmodus.

## Claims

1. Transformerless inverter with
- a step-down converter (10) with
- an input side with two input connections (E1, E2), an output side with two output connections (A1, A2), and one main branch (1, 2) each between one of the input connections and one of the output connections,
- a capacitor series connection on the input side with at least two capacitors (C1, C2) connected in series between the two main branches (1, 2)
- a capacitor series connection on the output side with at least two capacitors (C3, C4) connected in series between the two main branches,
- a diode series connection arranged between the capacitor series connection on the side of the input and of the output, the diode series connection having at least two diodes (D1, D2) connected in series between the two main branches,
- a middle branch (3) connecting without further connection to the side of the input and the output an intermediate node (KCE) of the capacitor series connection on the input side with an intermediate node (KD) of the diode series connection and an intermediate node (KCA) of the capacitor series connection on the output side,
- one storage choke (L1, L2) each in both main branches between the diode series connection and the capacitor series connection on the output side,
- at least one diode (D3, D4) connected in parallel with one of the capacitors (C3, C4) each of the capacitor series connection on the output side,
- one switch (S1, S2) each that can be controlled in clocked manner in the two main branches between the capacitor series connection on the input side and the diode series connection, and
- a control unit (6) for controlling the switches in a switch control mode where it switches the two switches at different times and/or in different switch positions;
and
- a pole reverser/inverter bridge circuit (11) coupled with the output connections of the step-down converter.

2. The transformerless inverter according to claim 1, **characterized in that** the control unit is arranged for controlling the switches depending on whether the amount of an output voltage (UW) formed periodically from a first and a second half wave at the output connections with reference to an input voltage (UE) at the input connections is above or below a predefined threshold value, and whether this is each time the first or second half wave, in four different control modes, wherein in a first control mode a first switch (S1) of the two switches remains open and the second switch (S2) is switched in clocked manner, in a second control mode the second switch (S2) remains closed and the first switch (S1) is switched in clocked manner, in a third control mode the second switch (S2) remains open and the first switch (S1) is switched timed, and in a fourth control mode the first switch (S1) remains closed and the second switch (S2) is switched in clocked manner.

3. The transformerless inverter according to either of the claims 1 or 2, **characterized in that** the step-down converter formed of two symmetric halves creates jointly one single output voltage, and/or the step-down converter formed of two symmetric halves is fed by a single input voltage.

4. The transformerless inverter according to any one of the claims 1 to 3, **characterized in that** the pulsating DC voltage at the output of the step-down converter has the shape of a sinus half wave, and/or the sinus half waves repeat at the output of the step-down converter every 8.3 ms or every 10 ms.

5. The transformerless inverter according to any one of the claims 1 to 4, **characterized in that** at the output of step-down converter a pulsating DC voltage forms, and/or the DC voltage pulsates at the output of the step-down converter circuit with a frequency of 100 Hz or 120 Hz.

6. The transformerless inverter according to any one of the claims 1 to 5, **characterized in that** the two halves of the symmetrically formed step-down converter are controlled such that the voltage at the capacitors (C1, C2) of the capacitor series connection on the input side assume the same value, or the two halves of the symmetrically formed step-down converter are controlled such that the voltage at the capacitors (C1, C2) of the capacitor series connection on the input side remain in a certain ratio, and/or the two halves of the symmetrically formed step-down converter are controlled such that they take each time the identical amount of charge from the capacitor series connection on the input side.

7. The transformerless inverter according to any one of the claims 1 to 6, **characterized in that** on at least one capacitor (C3, C4) of the capacitor series connection on the output side one absorption element (DN3, DN4) each is arranged parallel, and/or on the output side of the step-down converter between the two main branches (1, 2) an absorption element (DN5) is arranged.

8. The transformerless inverter according to any one of the claims 1 to 7, **characterized in that** in both halves of the symmetrically formed step-down converter in each case of operation the same average current flows, and/or during the transition from one control mode to another control mode temporarily both switches S1 and S2 are controlled in clocked manner.

9. The transformerless inverter according to any one of the claims 1 to 8, **characterized in that** it is configured for connecting a photovoltaic generator or a system of fuel cells to the power grid.

10. The transformerless inverter according to any one of the claims 1 to 9, **characterized in that** it is configured for connecting several parallel voltage generators on the input side, in particular photo voltaic generators, to a three-phase AC current grid, and one step-down converter, that is connected parallel on the output side to a three-phase AC current inverter bridge unit, is allocated to each voltage generator.

11. The transformerless inverter according to any one of the claims 1 to 10, **characterized in that** it has a configuration with switched T-filter, and the pole reverser/inverter bridge circuit has one inductivity (L3, L4) each for that in two parallel output branches.

12. The transformerless inverter according to any of the claims 1 to 11, **characterized in that** a respective absorption element (DN1 to DN9), dimensioned for resonance absorption of the T-filter structure, is connected in parallel with at least one of the two storage chokes (L1, L2) of the step-down converter, and/or is inserted on the side of the output between the two main branches of the step-down converter.

13. Method for the operation of a transformerless inverter according to any one of the claims 1 to 12, **characterized by** the following clocking of the switches (S1, S2)that are controlled in clocked manner for providing output voltage (UW) formed periodically from a first and a second half wave from input voltage (UE):
- during an initial interval ([t0, t1]) of the first half wave, while the output voltage is below a predefined threshold value with reference to the input voltage, controlling the two switches in a first control mode, where a first (S1) of the two switches is held open and the second switch (S2) is switched in clocked manner,
- during a middle interval ([t1, t2]) of the first half waver joining the initial interval, while the output voltage is above the threshold value, controlling the switches in a second control mode, where the first switch (S1) is switched in clocked manner and the second switch (S2) is held closed,
- during a final interval ([t2, t3]) of the first half wave joining the middle interval, while the output voltage is below the threshold value, controlling the switches in a first control mode,
- during an initial interval ([t3, t4]) of the second half wave joining the final interval of the first half wave, while the output voltage is below the threshold value, controlling the switches in a third control mode, where the first switch (S1) is switched in clocked manner and the second switch (S2) is held open,
- during a middle interval ([t4, t5]) of the second half wave joining the initial interval of the second half wave, while the output voltage is above the threshold value, controlling the switches in a fourth control mode, where the first switch (S1) is held closed and the second switch (S2) is switched in clocked manner, and
- during a final interval ([t5, t6]) of the second half wave joining the middle interval of the second half wave, while the output voltage is below the threshold value, controlling the switches in the third control mode.

## Revendications

1. Onduleur sans transformateur comportant:
- un convertisseur abaisseur (10) avec:
- un côté d'entrée avec deux bornes d'entrée (E1, E2), un côté de sortie avec deux bornes de sortie (A1, A2) et une branche principale (1, 2) entre chacun des couples entrée - sortie,
- un circuit formé du côté entrée par des condensateurs en série, c'est-à-dire par au moins deux condensateurs (C1, C2) combinés en série entre les deux branches principales (1,2),
- un circuit formé du côté de sortie par des condensateurs en série, c'est-à-dire par au moins deux condensateurs (C3, C4) combinés en série entre les deux branches principales,
- un circuit en série de diodes situé entre les circuits en série de condensateurs d'entrée et de sortie formé d'au moins deux diodes (D1, D2) combinées en série entre les deux branches principales,
- une branche intermédiaire (3) sans connexion directe avec le côté d'entrée ou de côté de sortie et qui lie un noeud intermédiaire (KCE) des condensateurs en série du côté d'entrée avec un noeud intermédiaire (KD) des diodes en série et avec un noeud intermédiaire (KCA) des condensateurs en série du côté de sortie,
- une bobine d'accumulation (L1, L2), chacune située dans une des deux branches principales entre les diodes en série et les condensateurs en série du côté de sortie,
- au moins une diode (D3, D4), située en parallèle à chacun des condensateurs du côté de la sortie,
- un interrupteur pouvant être cadencé (S1, S2) situé dans les deux branches principales entre les condensateurs en série du côté d'entrée et les diodes en série et
- une unité de contrôle (6) permettant de commander les interrupteurs selon un mode alterné dans le temps et/ou de position
et
- un circuit inverseur de pôles / pont inverseur (11) couplé aux bornes de sortie du convertisseur abaisseur.

2. Onduleur sans transformateur selon la revendication 1, **caractérisé en ce que** l'unité de contrôle est configurée de façon à permettre de commander les interrupteurs selon 4 modes de commande différents en fonction de l'amplitude de sortie (UW) d'une première et d'une deuxième demi-onde créée aux bornes de sortie par rapport à la tension d'entrée (UE) aux bornes d'entrée est en absolu au-dessus ou en-dessous d'une valeur seuil pouvant être prédéfinie et s'il s'agit dans ce cas de la première ou de la deuxième demi-onde, de façon à ce qu'en premier mode de commande le premier interrupteur (S1) des deux reste ouvert et le deuxième (S2) est commandé cadencé, en deuxième mode de commande le deuxième interrupteur (S2) reste fermé et le premier interrupteur (S1) est cadencé, en troisième mode de commande le deuxième interrupteur (S2) reste ouvert et le premier interrupteur (S1) est cadencé puis en quatrième mode de commande le premier interrupteur (S1) reste fermé et le deuxième interrupteur (S2) est cadencé.

3. Onduleur sans transformateur selon une des revendications 1 ou 2, **caractérisé en ce que** deux moitiés symétriques forment le convertisseur abaisseur produisant ensemble une seule tension de sortie et/ou **en ce que** le convertisseur abaisseur formé par deux moitiés symétriques n'est alimenté que par une seule tension d'entrée.

4. Onduleur sans transformateur selon une des revendications 1 à 3, **caractérisé en ce que** la tension continue pulsée au niveau de la sortie du convertisseur abaisseur possède une forme d'une demi-onde de sinus et/ou **en ce que** les demi-ondes de sinus se répètent toutes les 8,3ms ou toutes les 10ms au niveau de la sortie du convertisseur abaisseur.

5. Onduleur sans transformateur selon une des revendications 1 à 4, **caractérisé en ce qu'**une tension continue pulsée est formée à la sortie du convertisseur abaisseur et/ou **en ce que** la tension continue de la sortie du convertisseur abaisseur pulse à une fréquence de 100Hz ou de 120Hz.

6. Onduleur sans transformateur selon une des revendications 1 à 5, **caractérisé en ce que** les deux moitiés du convertisseur abaisseur construit symétriquement sont commandées de façon à ce que les tensions au niveaux des condensateurs (C1, C2) du circuit de condensateurs en série du côté d'entrée restent dans un certain rapport entre eux et/ou **en ce que** les deux moitiés du convertisseur abaisseur construit symétriquement sont commandées de façon à ce qu'elles prélèvent à chacun des condensateurs (C1, C2) en série du côté d'entrée la même quantité de charge.

7. Onduleur sans transformateur selon une des revendications 1 à 6, **caractérisé en ce qu'**au moins à un des condensateurs (C3, C4) des condensateurs en série du côté de la sortie, un élément atténuant (DN3, DN4) est ajouté en parallèle et/ou **en ce qu'**un élément atténuant (DN5) est situé entre les deux branches principales (1, 2) au niveau de la sortie du convertisseur abaisseur.

8. Onduleur sans transformateur selon une des revendications 1 à 7, **caractérisé en ce que** les mêmes courants moyennés/moyens circulent dans chacune des deux moitiés du convertisseur abaisseur construit symétriquement et/ **en ce que** les deux interrupteurs S1 et S2 sont cadencés temporairement ensemble lors de la transition d'un mode de commande à un autre.

9. Onduleur sans transformateur selon une des revendications 1 à 8, **caractérisé en ce qu'**il est configuré pour être branché au secteur à partir d'un générateur photovoltaïque ou d'une cellule à combustion.

10. Onduleur sans transformateur selon une des revendications là 9, **caractérisé en ce qu'**il est configuré pour être branché à un réseau triphasé à partir de plusieurs générateurs de tensions en parallèle du côté de l'entrée et en particulier des générateurs photovoltaïques de façon à ce que chacun des générateurs de tension est associé un convertisseur abaisseur qui est lui-même connecté au niveau de sa sortie à une unité de pont inverseur triphasé.

11. Onduleur sans transformateur selon une des revendications 1 à 10, **caractérisé en ce qu'**il est configuré avec un filtre T et **en ce que** les inverseurs de pôle / ponts inverseurs possèdent pour ceci chacun une inductance (L3, L4) dans deux branches parallèles de sortie.

12. Onduleur sans transformateur selon une des revendications 1 à 11, **caractérisé en ce qu'**un élément atténuant (DN1 à DN9), dimensionné pour atténuer la résonance de la structure du filtre T, est mis en parallèle d'au moins une des deux bobines accumulatrices (L1, L2) du convertisseur abaisseur et/ou inséré au niveau de la sortie entre les deux branches principales du convertisseur abaisseur.

13. Procédé destiné à l'usage d'un onduleur sans transformateur selon une des revendications 1 à 12, **caractérisé par** la cadence suivant des interrupteurs cadencés (S1, S2) pour une mise à disposition d'une tension de sortie (UW) formée d'une première et d'une deuxième demi-onde à partir d'une tension d'entrée (UE):
- lors d'un intervalle de début ([t0, t1]) de la première demi-onde durant lequel la tension de sortie par rapport à la tension d'entrée est située en-dessous d'un seuil pouvant être prédéfini, commande des deux interrupteurs selon un premier mode de commande en ouvrant le premier des deux interrupteurs (S1) et en cadençant le deuxième interrupteur,
- lors d'un intervalle intermédiaire ([t1, t2]) de la première demi-onde suivant l'intervalle de début, durant lequel la tension de sortie est située au-dessus du seuil , commande des interrupteurs selon un deuxième mode de commande en cadençant le premier interrupteur (S1) et en gardant le deuxième interrupteur (S2) fermé,
- lors d'un intervalle de fin ([t2, t3]) de la première demi-onde suivant l'intervalle intermédiaire, durant lequel la tension de sortie est située en-dessous du seuil, commande des interrupteurs selon le premier mode de commande,
- lors d'un intervalle de début ([t3, t4]) de la deuxième demi-onde suivant l'intervalle de fin de la première demi-onde, durant lequel la tension de sortie est située en-dessous du seuil, commande des interrupteurs selon un troisième mode de commande en cadençant le premier interrupteur (S1) et en gardant le deuxième interrupteur (S2) ouvert,
- lors d'un intervalle intermédiaire ([t4, t5]) de la deuxième demi-onde suivant l'intervalle de début de la deuxième demi-onde, durant lequel la tension de sortie est située au-dessus du seuil, commande des interrupteurs selon un quatrième mode de commande en gardant le premier interrupteur (S1) fermé et en cadençant le deuxième interrupteur (S2),
- lors d'un intervalle de fin ([t5, t6]) de la deuxième demi-onde suivant l'intervalle intermédiaire de la deuxième demi-onde, durant lequel la tension de sortie est située en-dessous du seuil, commande des interrupteurs selon le troisième mode de commande.
